(19) Europäisches Patentamt
European Patent Office
Office européen des brevets

(11) Veröffentlichungsnummer: **0 467 205 A1**

(12) # EUROPÄISCHE PATENTANMELDUNG

(21) Anmeldenummer: **91111461.9**

(22) Anmeldetag: **10.07.91**

(51) Int. Cl.5: **C08L 25/12**, C08L 51/04, C08K 7/14, C08L 67/02, //(C08L25/12,51:04,67:02)

(30) Priorität: **19.07.90 DE 4022988**

(43) Veröffentlichungstag der Anmeldung: **22.01.92 Patentblatt 92/04**

(84) Benannte Vertragsstaaten: **BE DE FR GB NL**

(71) Anmelder: **BASF Aktiengesellschaft**
**Carl-Bosch-Strasse 38**
**W-6700 Ludwigshafen(DE)**

(72) Erfinder: **Mc Kee, Graham Edmund, Dr.**
**Kastanienweg 8**
**W-6940 Weinheim(DE)**
Erfinder: **Heckmann, Walter, Dr.**
**Geiersbergstrasse 2**
**W-6940 Weinheim(DE)**
Erfinder: **Bueschl, Rainer, Dr.**
**Hollandstrasse 14**
**W-6701 Roedersheim-Gronau(DE)**
Erfinder: **Knoll, Manfred**
**Pfrimmstrasse 1**
**W-6521 Wachenheim(DE)**

(54) **Thermoplastische Formmassen auf der Basis von Polyester und Styrol/Acrylnitril-Copolymerisaten.**

(57) Thermoplastische Formmassen, erhältlich durch Abmischen einer Mischung a) aus Styrol-Copolymerisaten und ggf. Pfropfpolymerisaten und einer Mischung b) aus Polyestern und Pfropfpolymerisaten, wobei die Mischung b) vor dem Abmischen mit der Mischung a) bei einer Temperatur von 50 °C unterhalb bis 100 °C oberhalb des Schmelzpunktes des Polyesters über einen Zeitraum von 10 min bis 100 Stunden einer thermischen Behandlung unterworfen wird.

EP 0 467 205 A1

Rank Xerox (UK) Business Services

Die vorliegende Erfindung betrifft thermoplastische Formmassen, erhältlich durch Abmischen von

a) 50 bis 99 Gew.-% einer Mischung aus

$a_1$) 40 bis 100 Gew.-% eines Copolymerisats aus

$a_{11}$) 50 bis 90 Gew.-% Styrol oder substituierten Styrolen der allgemeinen Formel I

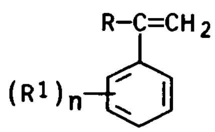

(I)

wobei R einen Alkylrest mit 1 bis 8 C-Atomen, ein Wasserstoffatom oder ein Halogenatom und $R^1$ einen Alkylrest mit 1 bis 8 C-Atomen oder ein Halogenatom darstellen und n den Wert 0, 1, 2 oder 3 hat oder deren Mischungen,

$a_{12}$) 10 bis 50 Gew.-% Acrylnitril oder Methacrylnitril oder deren Mischungen

$a_{13}$) 0 bis 30 Gew.-% eines polymerisierbaren Monomeren mit Carboxyl-, Carboxylderivat-, Hydroxyl- oder Epoxygruppen,

$a_2$) 0 bis 60 Gew.-% eines Pfropfpolymerisats, aufgebaut aus

$a_{21}$) 30 bis 90 Gew.-% einer Pfropfgrundlage aus einem kautschukelastischen Polymeren mit einer Glasübergangstemperatur von unter 0 °C

$a_{22}$) 10 bis 70 Gew.-% einer Pfropfauflage aus

$a_{221}$) 50 bis 90 Gew.-% Styrol oder substituierten Styrolen der allgemeinen Formel I oder deren Mischungen und

$a_{222}$) 10 bis 50 Gew.-% Acrylnitril oder Methacrylnitril oder deren Mischungen,

$a_{223}$) 0 bis 30 Gew.-% eines polymerisierbaren Monomeren mit Carboxyl-, Carboxylderivat-, Hydroxyl- oder Epoxygruppen,

b) 1 bis 50 Gew.-% einer Mischung aus

$b_1$) 10 bis 99 Gew.-% eines Polyesters

$b_2$) 1 bis 90 Gew.-% eines Pfropfpolymerisats, aufgebaut aus

$b_{21}$) 30 bis 90 Gew.-% einer Pfropfgrundlage aus einem kautschukelastischen Polymeren mit einer Glasübergangstemperatur von unter 0 °C

$b_{22}$) 10 bis 70 Gew.-% einer Pfropfauflage aus

$b_{221}$) 50 bis 90 Gew.-% Styrol oder substituierten Styrolen der allgemeinen Formel I oder deren Mischungen und

$b_{222}$) 10 bis 50 Gew.-% Acrylnitril oder Methacrylnitril oder deren Mischungen,

$b_{223}$) 0 bis 30 Gew.-% eines polymerisierbaren Monomeren mit Carboxyl-, Carboxylderivat-, Hydroxyl- oder Epoxygruppen,

und

c) 0 bis 50 Gew.-% faser- oder teilchenförmige Füllstoffe oder deren Mischungen,

wobei die Mischung b) vor dem Abmischen mit der Mischung a) bei einer Temperatur im Bereich von 50 °C unterhalb bis 100 °C oberhalb des Schmelzpunkts des Polyesters $b_1$) über einen Zeitraum von 10 min bis 100 Stunden einer thermischen Behandlung unterworfen wird.

Aus der EP-A 139 084 ist ein Verfahren zur Herstellung von kerbschlagzähen Formmassen bekannt, wobei Mischungen aus 70 bis 90 Gew.-% eines Polyalkylenterephthalats und 5 bis 30 Gew.-% eines Acrylat-Propfcopolymeren bei Temperaturen von 15 bis 60 °C unterhalb des Schmelzpunkts des Polyesters in einer Inertgasatmosphäre thermisch behandelt werden.

In der EP-A 142 675 werden Formmassen aus thermoplastischem Polyester und Pfropfkautschuk beschrieben, die infolge einer thermischen Behandlung einen bestimmten Mindest-Ankopplungsgrad aufweisen.

Schließlich ist aus der EP-A 141 016 ein Verfahren analog zur oben genannten EP-A 139 084 bekannt, wobei anstelle des Acrylat-Pfropfpolymeren ein α-Olefin-Copolymer eingesetzt wird.

Aus der DE-A 27 58 497 sind thermoplastische Formmassen auf der Basis von Polyestern, Pfropfpolymerisaten und Styrol/Acrylnitril-Copolymerisaten bekannt. Eine thermische Behandlung zur Verbesserung der Eigenschaften wird nicht erwähnt.

Diese bekannten Produkte weisen gegenüber den einfachen Abmischungen aus den Bestandteilen zwar verbesserte Schlagzähigkeitseigenschaften auf, doch wäre es für manche Anwendungen wünschenswert, das Eigenschaftsspektrum zusätzlich in Richtung Steifigkeit, Schaumhaftung, Lösungsmittelbeständigkeit und Wärmeformbeständigkeit zu optimieren.

Aufgabe der vorliegenden Erfindung war es daher, thermoplastische Formmassen auf der Basis von Polyestern und Styrol/Acrylnitril-Copolymerisaten zur Verfügung zu stellen, die in dieser Richtung optimiert sind.

Diese Aufgabe wird erfindungsgemäß gelöst durch die eingangs definierten thermoplastischen Formmassen gemäß Anspruch 1.

Bevorzugte Massen dieser Art sind den Unteransprüchen zu entnehmen.

Als Komponente a) enthalten die erfindungsgemäßen thermoplastischen Formmassen 50 bis 99 Gew.-%, vorzugsweise 53 bis 95 Gew.-% und insbesondere 58 bis 95 Gew.-% einer Mischung aus

$a_1$) 40 bis 100 Gew.-%, vorzugsweise 45 bis 90 Gew.-%, insbesondere 50 bis 80 Gew.-% eines Copolymerisats aus

$a_{11}$) 50 bis 90, vorzugsweise 55 bis 90 und insbesondere 65 bis 80 Gew.-% Styrol und/oder substituierten Styrolen der allgemeinen Formel I

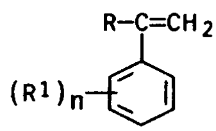

(I)

wobei R Alkylreste mit 1 bis 8 C-Atomen, Wasserstoffatome oder Halogenatome und $R^1$ Alkylreste mit 1 bis 8 C-Atomen oder Halogenatome darstellen und n der Wert 0, 1, 2 oder 3 hat, und

$a_{12}$) 10 bis 50, vorzugsweise 10 bis 45 und insbesondere 20 bis 35 Gew.-% Acrylnitril oder Methacrylnitril oder deren Mischungen und

$a_{13}$) 0 bis 30 Gew.-% eines polymerisierbaren Monomeren mit Carboxyl-, Carboxylderivat-, Hydroxyl- oder Epoxygruppen,

$a_2$) 0 bis 60 Gew.-%, bevorzugt 10 bis 55 Gew.-%, besonders bevorzugt 20 bis 50 Gew.-% eines Pfropfpolymerisats, aufgebaut aus

$a_{21}$) 30 bis 90 Gew.-%, vorzugsweise 40 bis 80 Gew.-% einer Propfgrundlage aus einem kautschukelastischen Polymeren mit einer Glasübergangstemperatur von unter 0 °C

$a_{22}$) 10 bis 70 Gew.-%, vorzugsweise 20 bis 60 Gew.-% einer Pfropfauflage aus

$a_{221}$) 50 bis 90, vorzugsweise 60 bis 80 Gew.-% Styrol oder substituierten Styrolen der allgemeinen Formel I oder deren Mischungen

$a_{222}$) 10 bis 50, vorzugsweise 20 bis 40 Gew.-% Acrylnitril oder Methacrylnitril oder deren Mischungen und

$a_{223}$) 0 bis 30, vorzugsweise bis zu 20 Gew.-% eines polymerisierbaren Monomeren mit Carboxyl-, Carboxylderivat-, Hydroxyl- oder Epoxygruppen.

Werden als Monomere $a_{11}$) substituierte Styrole der allgemeinen Formel I verwendet, so sind beispielsweise α-Methylstyrol, p-Methylstyrol, p-Chlorstyrol und p-Chlor-α-Methylstyrol zu nennen, wovon Styrol und α-Methylstyrol bevorzugt werden.

Falls Monomere $a_{13}$) vorhanden sind, beträgt deren Anteil an dem Copolymerisat $a_1$) 0,1 bis 30, vorzugsweise 0,2 bis 20 und insbesondere 0,5 bis 10 Gew.-%.

Beispiele für Monomere $a_{13}$) sind Methacrylsäureglycidylester, Acrylsäureglycidylester, Allylglycidylether, Vinylglycidylether und Itaconsäureglycidylester, sowie Acrylsäure, Methacrylsäure und ihre Metall-, insbesondere Alkalimetallsalze und Ammoniumsalze, Maleinsäure, Maleinsäureanhydrid, Metallsalze des sauren Monoethylesters der Maleinsäure, Fumarsäure, Fumarsäuremonoethylester, Itaconsäure, Vinylbenzoesäure, Vinylphthalsäure, Salze von Fumarsäuremonoethylester, Monoester von Maleinsäure, Fumarsäure, (Meth)acrylsäure und Itaconsäure mit Alkoholen ROH, wobei R bis zu 29 Kohlenstoffatomen aufweist, z.B. Methyl, Propyl, Isopropyl, Butyl, Isobutyl, Hexyl, Cyclohexyl, Octyl, 2-Ethylhexyl, Decyl, Stearyl, Methoxyethyl, Ethoxyethyl und Hydroxyethyl.

Maleinsäureanhydrid und Metallsalze (insbesondere Alkalimetall und Erdalkalimetallsalze) von polymerisierbaren Carbonsäuren weisen zwar keine freien Carboxylgruppen auf, kommen aber in ihrem Verhalten den freien Säuren nahe, so daß sie hier von dem Oberbegriff carboxylgruppenhaltige Monomere mit umfaßt werden sollen.

Als zweite Gruppe von Monomeren $a_{13}$) sind Lactamgruppen enthaltende Monomere geeignet.

Diese enthalten eine Lactamgruppe der allgemeinen Formel

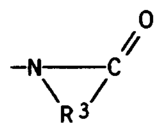

wobei $R^3$ eine verzweigte oder lineare Alkylengruppe mit 2 bis 15 C-Atomen darstellt.

Nur stellvertretend seien hier ß-Propiolactame (Azetidin-2-one) der allgemeinen Formel

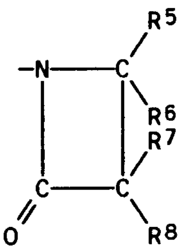

wobei die Substituenten $R^5$ bis $R^8$ eine Alkylgruppe mit 1 bis 6 C-Atomen oder ein Wasserstoffatom sein können, genannt. Diese werden von R. Graf in Angew. Chem. 74 (1962), 523-530 und H. Bastian in Angew. Chem. 80 (1968), 304-312 beschrieben. Ein Beispiel hierfür ist 3,3'-Dimethyl-3-propiolactam.

Weitere geeignete Lactam-Verbindungen sind

2-Pyrrolidone

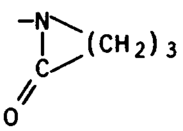

ε-Caprolactam

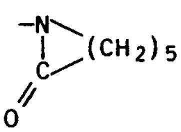

7-Önantholactam, 8-Capryllactam und 12-Laurinlactam, wie sie von H. Dachs, Angew. Chemie 74 (1962), 540-45 beschrieben werden.

Von diesen werden 2-Pyrrolidone und ε-Caprolactame besonders bevorzugt.

Vorzugsweise sind die Lactamgruppen wie in

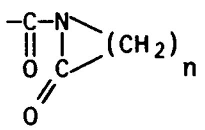

über eine Carbonylgruppe am Stickstoff in die entsprechenden Monomeren eingebaut.

Ein besonders bevorzugtes Beispiel hierfür ist N-(Meth)acryloyl-ε-Caprolactam

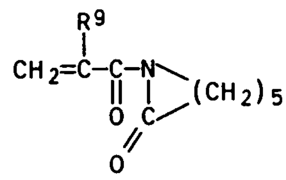

wobei $R^9$ ein Wasserstoffatom oder eine Methylgruppe ist.

Bevorzugte Monomere $a_{13}$) sind Glycidylester der Acrylsäure und Methacrylsäure, Maleinsäureanhydrid, tert.-Butylacrylat, Fumarsäure und Maleinsäure.

Verfahren zur Herstellung von Copolymerisaten $a_1$) sind dem Fachmann bekannt und in der Literatur beschrieben, so daß sich hier nähere Angaben erübrigen.

Als Komponente $a_2$) können die erfindungsgemäßen thermoplastischen Formmassen 0 bis 60, vorzugsweise 10 bis 55 und insbesondere 20 bis 50 Gew.-% eines Pfropfpolymerisats, aufgebaut aus

$a_{21}$) 30 bis 90 Gew.-%, vorzugsweise 40 bis 80 Gew.-% einer Propfgrundlage aus einem kautschukelastischen Polymeren mit einer Glasübergangstemperatur von unter 0 °C

$a_{22}$) 10 bis 70 Gew.-%, vorzugsweise 20 bis 60 Gew.-% einer Pfropfauflage aus

$a_{221}$) 50 bis 90, vorzugsweise 60 bis 80 Gew.-% Styrol oder substituierten Styrolen der allgemeinen Formel I oder deren Mischungen

$a_{222}$) 10 bis 50, vorzugsweise 20 bis 40 Gew.-% Acrylnitril oder Methacrylnitril oder deren Mischungen und

$a_{223}$) 0 bis 30, vorzugsweise, bis zu 20 Gew.-% eines polymerisierbaren Monomeren mit Carboxyl-, Carboxylderivat-, Hydroxyl- oder Epoxygruppen,

enthalten.

Für die Pfropfgrundlage $a_{21}$) kommen Polymerisate in Frage, deren Glasübergangstemperatur unterhalb von 0 °C, vorzugsweise unterhalb von -20 °C liegt. Dies sind z.B. Naturkautschuk, Synthesekautschuke auf der Basis von konjugierten Dienen, ggf. mit anderen Copolymeren sowie Elastomere auf der Basis von $C_1$- bis $C_8$-Alkylestern der Acrylsäure oder Methacrylsäure, die ggf. ebenfalls weitere Comonomere enthalten können.

Elastomere des letztgenannten Typs werden vorzugsweise vernetzt, was durch Mitverwendung von mindestens difunktionellen Monomeren erfolgen kann, die vorzugsweise zur Copolymerisation befähigte ethylenische Doppelbindungen enthalten.

Beispielsweise seien Divinylbenzol, Diallylmaleat, Diallylfumarat, Diallylphthalat, Triallyl(iso)cyanurat, Tricyclodecenylacrylat, Butadien und Dihydrodicyclopentadienylacrylat genannt. Der Anteil an solchen Monomeren, die nachstehend bei der Beschreibung der bevorzugten Pfropfgrundlagen mit $\alpha_2$ bzw. $\alpha_5$ bezeichnet werden, beträgt im allgemeinen 0,1 bis 5, vorzugsweise 0,5 bis 4 Gew.-%, bezogen auf die Gesamtmenge der Monomeren für die Pfropfgrundlage.

Weitere Beispiele sind Ethylen/Propylen (EP) oder Ethylen-Propylen-Dien Kautschuke (EPDM), wie sie kommerziell erhältlich sind, oder Silikonkautschuke wie sie in der EP-A-231 776 beschrieben werden.

Nachstehend werden zwei besonders bevorzugte Arten von Pfropfgrundlagen beschrieben.

Zum einen sind dies Pfropfgrundlagen aus

$\alpha_1$) 95 bis 99,9 Gew.-% eines $C_1$- bis $C_8$-Alkylesters der Acrylsäure oder Methacrylsäure oder deren Mischungen, insbesondere n-Butylacrylat und/oder 2-Ethylhexylacrylat, und

$\alpha_2$) 0,1 bis 5 Gew.-% eines difunktionellen Monomeren, vorzugsweise Dihydrodicyclopentadienylacrylat oder Tricylodecenylacrylat oder deren Mischungen.

Eine andere bevorzugte Gruppe sind Pfropfgrundlagen auf der Basis von

$\alpha_3$) 50 bis 100 Gew.-% eines konjugierten Diens, vorzugsweise Butadien-1,3,

$\alpha_4$) 0 bis 50 Gew.-% Styrol, Acrylnitril, Methacrylnitril und/oder $C_1$- bis $C_8$-Alkylestern der Acrylsäure oder Methacrylsäure und

$\alpha_5$ 0 bis 5 Gew.-% eines vernetzenden Monomeren.

Pfropfgrundlagen der beiden vorgenannten Arten sind an sich bekannt und in der Literatur beschrieben, beispielsweise in der DE-PS 34 46 225, der DE-PS 12 60 135, der EP-A-1245 und der DE-AS 24 27 960 um nur vier Beispiele zu nennen.

Auf die Pfropfgrundlage $a_{21}$) ist eine Pfropfhülle $a_{22}$) aufgepfropft, die durch Copolymerisation der Komponenten $a_{221}$), $a_{222}$) und $a_{223}$) erhältlich ist. Hinsichtlich dieser Komponenten gilt das vorstehend für die Monomeren $a_{11}$), $a_{12}$) und $a_{13}$) Gesagte, worauf hier zur Vermeidung von Wiederholungen verwiesen wird.

Vorzugsweise wird die Pfropfhülle in Emulsion oder in Lösung hergestelt, wie dies z.B. in der DE-PS 1 260 135, DE-OS 32 27 555, und der DE-OS 34 14 118 beschrieben ist. Bei der sogenannten Lösungspolymerisation wird die Pfropfgrundlage in einer Lösung der Pfropfmonomeren für die Pfropfauflage gelöst, wonach diese polymerisiert werden. Die Verfahrensbedingungen sind der Encyclopedia of Polymer Science and Engineering, Band 1, Seiten 406 - 408 zu entnehmen.

Je nach den gewählten Bedingungen entsteht bei der Pfropfmischpolymerisation ein bestimmter Anteil an freien Copolymerisaten der Propfmonomeren $a_{221}$), $a_{222}$) und $a_{223}$).

Das Pfropfmischpolymerisat ($a_{21}$) + $a_{22}$)) weist im allgemeinen eine mittlere Teilchengröße von 0,09 bis 10 $\mu$m, im besonderen von 0,1 bis 0,8 $\mu$m ($d_{50}$-Gewichtsmittelwert) auf. Die Bedingungen bei der Herstellung der Pfropfgrundage $a_{21}$) und bei der Pfropfung werden daher vorzugsweise so gewählt, daß Teilchengrößen in diesem Bereich resultieren.

Als Komponente b) enthalten die erfindungsgemäßen thermoplastischen Formmassen 1 bis 50 Gew.-%, bevorzugt 5 bis 47 Gew.-%, besonders bevorzugt 5 bis 42 Gew.-% einer Mischung aus

$b_1$) 10 bis 99 Gew.-%, vorzugsweise 50 bis 95 Gew.-% und insbesondere 60 bis 90 Gew.-% eines Polyesters,

$b_2$) 1 bis 90 Gew.-%, bevorzugt 5 bis 50 Gew.-%, besonders bevorzugt 10 bis 40 Gew.-% eines Pfropfpolymerisats, aufgebaut aus

$b_{21}$) 30 bis 90 Gew.-%, vorzugsweise 40 bis 85 Gew.-% einer Pfropfgrundlage aus einem kautschukelastischen Polymeren mit einer Glasübergangstemperatur von unter 0 °C

$b_{22}$) 10 bis 70 Gew.-%, vorzugsweise 15 bis 60 Gew.-% einer Pfropfauflage aus

$b_{221}$) 50 bis 90, vorzugsweise 60 bis 80 Gew.-% Styrol oder substituierten Styrolen der allgemeinen Formel I oder deren Mischungen

$b_{222}$) 10 bis 50, vorzugsweise 20 bis 40 Gew.-% Acrylnitril oder Methacrylnitril oder deren Mischungen und

$b_{223}$) 0 bis 30, vorzugsweise bis zu 20 Gew.-% eines polymerisierbaren Monomeren mit Carboxyl-, Carboxylderivat-, Hydroxyl- oder Epoxygruppen.

Die als Komponente $b_1$) eingesetzten Polyester sind an sich bekannt. Vorzugsweise werden Polyester verwendet, die einen aromatischen Ring in der Hauptkette enthalten. Der aromatische Ring kann auch substituiert sein, z.B. durch Halogene, wie Chlor und Brom und/oder durch $C_1$- bis $C_4$-Alkylgruppen, wie z.B. Methyl-, Ethyl-, i- bzw. n-Propyl- und i- bzw. n- bzw. t-Butylgruppen.

Die Herstellung der Polyester kann durch Reaktion von Dicarbonsäuren, deren Estern oder anderer esterbildender Derivate mit Dihydroxyverbindungen in an sich bekannter Weise erfolgen.

Als Dicarbonsäuren kommen beispielsweise aliphatische und aromatische Dicarbonsäuren in Frage, die auch als Mischung eingesetzt werden können. Nur beispielsweise seien hier Naphthalindicarbonsäuren, Terephthalsäure, Isophthalsäure, Adipinsäure, Azelainsäure, Sebacinsäure, Dodecandisäure und Cyclohexandicarbonsäuren, Mischungen dieser Carbonsäuren und esterbildende Derivate derselben genannt.

Als Dihydroxyverbindungen werden vorzugsweise Diole mit 2 bis 10 C-Atomen, besonders bevorzugt Ethylenglykol, 1,4-Butandiol, 1,4-Butendiol und 1,6-Hexandiol verwendet; es können jedoch auch 1,4-Hexandiol, 1,4-Cyclohexandiol, 1,4-Di-(hydroxymethyl)cyclohexan, Bisphenol A, Neopentylglykol, Mischungen dieser Diole sowie esterbildende Derivate derselben eingesetzt werden.

Polyester aus Terephthalsäure oder Naphthalindicarbonsäuren und einer $C_2$- bis $C_6$-Diolkomponente, z.B. Polyethylenterephthalat, Polyethylennaphthalat oder Polybutylenterephthalat oder deren Mischungen werden besonders bevorzugt.

Die Viskositätszahl (VZ) der Polyester, gemessen an einer 0,5 gew.-%igen Lösung in einem Phenol/o-Dichlorbenzolgemisch (Gewichtsverhältnis 1:1) bei 25 °C, liegt im allgemeinen im Bereich von 30 bis 140.

Als vorteilhaft hat es sich weiter erwiesen, wenn die Polyester $b_1$) vor der thermischen Behandlung ein Endgruppenverhältnis der OH- zu den COOH-Endgruppen von mindestens 0,2:1, bevorzugt mindestens 0,3:1 aufweisen.

Bezüglich der Pfropfgrundlage $b_{21}$) bzw. der Pfropfauflage $b_{22}$) sei auf die Ausführungen bezüglich $a_{21}$) bzw. $a_{22}$) verwiesen.

Legt man besonderen Wert auf gute Witterungs- und UV-Beständigkeit, so sind die Pfropfgrundlagen $a_{21}$) und $b_{21}$) bevorzugt aus den Komponenten $\alpha_1$) und $\alpha_2$) aufgebaut. Steht die Tieftemperaturzähigkeit im Vordergrund, so sind $a_{21}$) und $b_{21}$) vorzugsweise aus den Komponenten $\alpha_3$), $\alpha_4$) und $\alpha_5$) aufgebaut.

Als Komponente c) können die erfindungsgemäßen Formmassen bis zu 50, insbesondere 7 bis 45 und besonders bevorzugt 10 bis 40 Gew.-%, faser- oder teilchenförmige Füllstoffe oder deren Mischungen, bezogen auf das Gesamtgewicht der Formmassen enthalten. Dabei handelt es sich vorzugsweise um kommerziell erhältliche Produkte.

Besonders bevorzugt als Komponente c) sind Glasfasern; diese haben in der Formmasse im allgemeinen eine mittlere Länge von 0,1 bis 0,5 mm, vorzugsweise von 0,1 bis 0,4 mm und einen Durchmesser im Bereich von 6 bis 20 µm. Besonders bevorzugt sind Glasfasern aus E-Glas. Zur Erzielung einer besseren Haftung können die Glasfasern mit Organosilanen, Epoxisilanen oder anderen Polymerüberzügen beschichtet sein.

Neben den Komponenten a), b) und c) können die erfindungsgemäßen Formmassen übliche Zusatzstoffe und Verarbeitungshilfsmittel enthalten.

übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, pulverförmige Füll- und Verstärkungsmittel und Weichmacher. Solche Zusatzstoffe werden in den üblichen wirksamen Mengen eingesetzt.

Die Stabilisatoren können den Massen in jedem Stadium der Herstellung der thermoplastischen Massen zugesetzt werden. Vorzugsweise werden die Stabilisatoren zu einem frühen Zeitpunkt zugesetzt, um zu verhindern, daß die Zersetzung bereits beginnt, bevor die Masse geschützt werden kann.

Zu den Oxidationsverzögerern und Wärmestabilisatoren, die den thermoplastischen Massen gemäß der Erfindung zugesetzt werden können, gehören diejenigen, die allgemein zu Polymeren zugesetzt werden, wie Halogenide von Metallen der Gruppe I des periodischen Systems, z.B. Natrium-, Kalium-, Lithium-Halogenide in Verbindung mit Kupfer-(I)-Halogeniden, z.B. Chloriden, Bromiden oder Jodiden. Ferner sind geeignete Stabilisatoren sterisch gehinderte Phenole, Hydrochinone, verschiedene substituierte Vertreter dieser Gruppe und Kombinationen derselben in Konzentrationen bis 1 Gew.-%, bezogen auf das Gewicht der Mischung.

Als UV-Stabilisatoren kann man ebenfalls diejenigen, die allgemein zu Polymeren zugesetzt werden, in Mengen bis zu 2 Gew.-%, bezogen auf das Gesamtgewicht der Mischung verwenden. Beispiele für UV-Stabilisatoren sind verschiedene substituierte Resorcine, Salicylate, Benzotriazole, Benzophenone und dergleichen.

Geeignete Gleit- und Entformungsmittel, die z.B. in Mengen bis zu 4 Gew.-% der thermoplastischen Masse zugesetzt werden, sind unter anderem Stearinsäuren, Stearylalkohol, Stearinsäureester und -amide.

Ferner können zugesetzt werden organische Farbstoffe wie Nigrosin, Pigmente, z.B. Titandioxid, Cadmiumsulfid, Cadmiumsulfid-selenid, Phthalocyanine, Ultramarinblau oder Ruß.

Auch Keimbildungsmittel, wie Talkum, Calciumfluorid, Natriumphenylphosphinat, Aluminiumoxid oder feinteiliges Polytetrafluorethylen können in Mengen z.B. bis zu 5 Gew.-%, bezogen auf die Masse, angewandt werden. Weichmacher, wie Phthalsäuredioctylester, Phthalsäuredibenzylester, Phthalsäurebutylbenzylester, Kohlenwasserstofföle, N-(n-Butyl)benzolsulfonamid, o- und p-Toluolethylsulfonamid werden vorteilhaft in Mengen bis etwa 20 Gew.-%, bezogen auf die Formmasse, zugesetzt. Färbemittel, wie Farbstoffe und Pigmente können in Mengen bis zu etwa 5 Gew.-%, bezogen auf die Formmasse, zugesetzt werden.

Die erfindungsgemäßen Formmassen sind erhältlich, indem man Mischungen b) bei einer Temperatur von 50 °C, vorzugsweise 10 bis 30 °C unterhalb bis 100 °C, vorzugsweise 80 °C oberhalb des Schmelzpunkts des Polyesters $b_1$) über einen Zeitraum von 10 min bis 100 h, vorzugsweise 20 min bis 70 h und insbesondere 20 min bis 50 h, vorzugsweise unter Inertgasatmosphäre thermisch behandelt. Im allgemeinen kann bei steigender Behandlungstemperatur der Wärmebehandlung deren Zeitdauer entsprechend verringert werden.

Die erfindungsgemäßen thermoplastischen Formmassen zeichnen sich durch ein insgesamt ausgewogenes Eigenschaftsspektrum aus und eignen sich zur Herstellung von Fasern, Folien und Formkörpern.

Beispiele

Es wurden folgende Komponenten eingesetzt:

$a_1$) Copolymerisat aus Styrol und Acrylnitril im Gew.-Verh. 65:35 mit einer Viskositätszahl von 80 $cm^3/g$, gemessen in 0,5 gew.-%iger Lösung in Dimethylformamid bei 25 °C.

$a_2$) Pfropfkautschuk, aufgebaut aus

- $a_{21}$) 60 Gew.-% einer Pfropfgrundlage aus
  - $\alpha_1$) 98 Gew.-% n-Butylacrylat und
  - $\alpha_2$) 2 Gew.-% Dihydrodicyclopentadienylacrylat

  und
- $a_{22}$) 40 Gew.-% einer Pfropfhülle aus
  - $a_{221}$) 75 Gew.-% Styrol und
  - $a_{222}$) 25 Gew.-% Acrylnitril,

hergestellt in Emulsion nach dem in der DE-AS 12 60 135 beschriebenen Verfahren,

$b_1$) Polybutylenterephthalat mit einer Viskositätszahl von 47 $cm^3/g$, gemessen in 0,5 gew.-%iger Lösung in einem Phenol-/o-Dichlorbenzolgemisch (Gew.-Verh. 1:1 bei 25 °C),

$b_2$) Pfropfkautschuk, aufgebaut aus

$b_{21}$) 80 Gew.-% einer Pfropfgrundlage aus

$\alpha_3$) 99 Gew.-% Butadien-1,3 und

1 Gew.-% t-Dodecylmercaptan (als Molekulargewichtsregler)

und

$b_{22}$) 20 Gew.-% einer Pfropfauflage aus

$b_{221}$) 75 Gew.-% Styrol und

$b_{222}$) 25 Gew.-% Acrylnitril.

Nach Herstellung der Pfropfgrundlage durch Emulsionspolymerisation in an sich bekannter Weise, wurden die Teilchen mit einem $d_{50}$-Wert von etwa 0,1 $\mu m$ (d.h. jeweils 50 Gew.-% der Teilchen haben einen Durchmesser von weniger bzw. mehr als 0,1 $\mu m$) durch Zugabe von 4 Gew.-% einer wäßrigen Dispersion eines Copolymeren aus 96 Gew.-% Ethylacrylat und 4 Gew.-% Methacrylamid agglomeriert, wonach der $d_{50}$-Wert bei 0,35 $\mu m$ lag. Die anschließende Pfropfung erfolgte in an sich bekannter Weise, in Anlehnung an DE-AS 24 27 960.

Herstellung der Mischung a)

Auf einem Extruder wurde zunächst eine 1:1 (Gew.-Verh.) Mischung aus $a_1$) und $a_2$) hergestellt und nach der Extrusion granuliert.

Herstellung der Mischung b)

Auf einem Extruder wurde zunächst eine 8:2 (Gew.-Verh.) Mischung aus $b_1$) und $b_2$) hergestellt und diese wurde bei 208 °C Innentemperatur unter Stickstoff für 24 Stunden thermisch behandelt.

Beispiele 1 und 2

Herstellung der thermoplastischen Formmassen

Die Komponenten a) und b) wurden bei 260 °C auf einem Extruder gemischt und granuliert.

Hieraus wurden die zur Bestimmung der Kerbschlagzähigkeit (nach DIN 53 453) erforderlichen Testkörper im Spritzguß hergestellt (Massetemperatur 260 °C, Formtemperatur 80 °C).

Vergleichsbeispiele 3V und 4V

Es wurde wie in den Beispielen 1 und 2 gearbeitet, als Komponente b) jedoch eine Vergleichsmischung bV) eingesetzt.

Herstellung der Vergleichsmischung bV)

Es wurde wie bei der Herstellung der Mischung b) gearbeitet, jedoch anstatt die Mischung aus $b_1$) und $b_2$) zu tempern, wurde zuerst der Polyester $b_1$) getempert und dann mit dem Pfropfpolymerisat $b_2$) abgemischt.

Vergleichsbeispiel 5V

Es wurde nur die Mischung a) verwendet.

Die Ergebnisse sind in der Tabelle zusammengestellt.

Tabelle

| Bsp. | Zusammensetzung (Gew.-%) a) | b) | bV) | Kerbschlagzähigkeit (23°C) kJ/m2 |
|---|---|---|---|---|
| 1 | 75 | 25 | - | 29 |
| 2 | 90 | 10 | - | 32 |
| 3V | 75 | - | 25 | 13 |
| 4V | 90 | - | 10 | 9 |
| 5V | 100 | - | - | 22 |

## Patentansprüche

**1.** Thermoplastische Formmassen, erhältlich durch Abmischen von
a) 50 bis 99 Gew.-% einer Mischung aus
$a_1$) 40 bis 100 Gew.-% eines Copolymerisats aus
$a_{11}$) 50 bis 90 Gew.-% Styrol oder substituierten Styrolen der allgemeinen Formel I

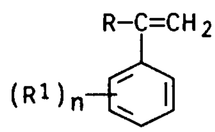

(I)

wobei R einen Alkylrest mit 1 bis 8 C-Atomen, ein Wasserstoffatom oder ein Halogenatom und $R^1$ einen Alkylrest mit 1 bis 8 C-Atomen oder ein Halogenatom darstellen und n den Wert 0, 1, 2 oder 3 hat oder deren Mischungen,
$a_{12}$) 10 bis 50 Gew.-% Acrylnitril oder Methacrylnitril oder deren Mischungen
$a_{13}$) 0 bis 30 Gew.-% eines polymerisierbaren Monomeren mit Carboxyl-, Carboxylderivat-, Hydroxyl- oder Epoxygruppen,
$a_2$) 0 bis 60 Gew.-% eines Pfropfpolymerisats, aufgebaut aus
$a_{21}$) 30 bis 90 Gew.-% einer Pfropfgrundlage aus einem kautschukelastischen Polymeren mit einer Glasübergangstemperatur von unter 0°C
$a_{22}$) 10 bis 70 Gew.-% einer Pfropfauflage aus
$a_{221}$) 50 bis 90 Gew.-% Styrol oder substituierten Styrolen der allgemeinen Formel I oder deren Mischungen und
$a_{222}$) 10 bis 50 Gew.-% Acrylnitril oder Methacrylnitril oder deren Mischungen,
$a_{223}$) 0 bis 30 Gew.-% eines polymerisierbaren Monomeren mit Carboxyl-, Carboxylderivat-, Hydroxyl- oder Epoxygruppen,
b) 1 bis 50 Gew.-% einer Mischung aus
$b_1$) 10 bis 99 Gew.-% eines Polyesters
$b_2$) 1 bis 90 Gew.-% eines Pfropfpolymerisats, aufgebaut aus
$b_{21}$) 30 bis 90 Gew.-% einer Pfropfgrundlage aus einem kautschukelastischen Polymeren mit einer Glasübergangstemperatur von unter 0°C
$b_{22}$) 10 bis 70 Gew.-% einer Pfropfauflage aus
$b_{221}$) 50 bis 90 Gew.-% Styrol oder substituierten Styrolen der allgemeinen Formel I oder deren Mischungen und
$b_{222}$) 10 bis 50 Gew.-% Acrylnitril oder Methacrylnitril oder deren Mischungen,
$b_{223}$) 0 bis 30 Gew.-% eines polymerisierbaren Monomeren mit Carboxyl-, Carboxylderivat-, Hydroxyl- oder Epoxygruppen,
und
c) 0 bis 50 Gew.-% faser- oder teilchenförmige Füllstoffe oder deren Mischungen,
wobei die Mischung b) vor dem Abmischen mit der Mischung a) bei einer Temperatur im Bereich von 50°C unterhalb bis 100°C oberhalb des Schmelzpunkts des Polyesters $b_1$) über einen Zeitraum von

10 min bis 100 Stunden einer thermischen Behandlung unterworfen wird.

2. Thermoplastische Formmassen nach Anspruch 1, dadurch gekennzeichnet, daß die Pfropfgrundlagen $a_{21}$) und/oder $b_{21}$) aufgebaut sind aus
   $\alpha_1$) 95 bis 99,9 Gew.-% n-Butylacrylat und/oder 2-Ethylhexylacrylat und
   $\alpha_2$) 0,1 bis 5 Gew.-% eines di- oder trifunktionellen Monomeren.

3. Thermoplastische Formmassen nach den Ansprüchen 1 bis 2, dadurch gekennzeichnet, daß die Pfropfgrundlagen $a_{21}$) und/oder $b_{21}$) aufgebaut sind aus
   $\alpha_3$) 50 bis 100 Gew.-% eines konjugierten Diens
   $\alpha_4$) 0 bis 50 Gew.-% Styrol, Acrylnitril, Methacrylnitril und/oder $C_1$- bis $C_8$-Alkylestern der Acrylsäure oder Methacrylsäure
   und
   $\alpha_5$) 0 bis 5 Gew.-% eines vernetzenden Monomeren.

4. Verwendung der thermoplastischen Formmassen gemäß den Ansprüchen 1 bis 3 zur Herstellung von Fasern, Folien und Formkörpern.

5. Formkörper, erhältlich aus thermoplastischen Formmassen gemäß den Ansprüchen 1 bis 3.

Europäisches Patentamt

# EUROPÄISCHER RECHERCHENBERICHT

Nummer der Anmeldung

**EP 91 11 1461**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | EP-A-0 429 956 (BASF)<br>* Seite 2, Zeile 54 - Seite 3, Zeile 1; Seite 3, Zeilen 25-43; Seite 6, Zeilen 21-28; Seite 8, Zeilen 11-17; Beispiele; Tab. Seiten 9,10; Ansprüche 1-5 *<br>– – – | 1-5 | C 08 L 25/12<br>C 08 L 51/04<br>C 08 K 7/14<br>C 08 L 67/02 //<br>(C 08 L 25/12<br>C 08 L 51:04<br>C 08 L 67:02 ) |
| P,X | EP-A-0 388 231 (JAP. SYNTH. RUBBER)<br>* Seite 5, Zeilen 1-31; Seite 6, Zeilen 6-45; Beispiele; Seite 10, Zeilen 49-56; Ansprüche 1,2,5,17 *<br>– – – | 1 | |
| A | EP-A-0 310 978 (BASF)<br>* Seite 2, Zeilen 1-37; Seite 3, Zeilen 48-49; Seite 5, Zeilen 51-53; Seite 6, Zeilen 6-29; Beispiele; Anspruch 1 *<br>– – – | 1 | |
| A | EP-A-0 310 977 (BASF)<br>* Seite 2, Zeilen 1-39; Seite 12, Zeile 55 - Seite 13, Zeile 26; Seite 14 (Beispiele); Anspruch 1 *<br>– – – – – | 1 | |
| | | | RECHERCHIERTE SACHGEBIETE (Int. Cl.5) |
| | | | C 08 K<br>C 08 L |

Der vorliegende Recherchenbericht wurde für alle Patentansprüche erstellt

| Recherchenort | Abschlußdatum der Recherche | Prüfer |
|---|---|---|
| Den Haag | 24 Oktober 91 | ENGEL H.S.L. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument